Europäisches Patentamt

(19) European Patent Office

Office européen des brevets

(11) Publication number: **0 004 477**
A1

(12) **EUROPEAN PATENT APPLICATION**

(21) Application number: 79300497.9

(22) Date of filing: 28.03.79

(51) Int. Cl.²: **B 60 T 13/24**

(30) Priority: 29.03.78 JP 40308/78

(43) Date of publication of application: 03.10.79
Bulletin 79/20

(84) Designated Contracting States: DE FR GB NL SE

(71) Applicant: TOKICO LTD., 6-3, Fujimi, 1-Chome
Kawasaki-Ku, Kawasaki-shi Kanagawa-ken (JP)

(72) Inventor: Hiromi, Ando, 1-14-12, Takadanobaba
Shinjuku-Ku, Tokyo (JP)

(74) Representative: Jones, Colin et al, W.P. THOMPSON &
CO. Coopers Building Church Street, Liverpool
L1 3AB (GB)

(54) **Force-multiplying pneumatic device.**

(57) A force multiplying pneumatic device, such as a booster, includes a body (1) having therein front and rear chambers (4 and 5) divided by a diaphragm (2) and a power piston (3). When a pressure difference is produced across the two chambers by operation of an input shaft (6) a frontward thrust is produced on the power piston and is transmitted to an output shaft (12) through an elastic reaction disc (10) which also acts to transmit a proportion of the reaction force of the output shaft to the input shaft. The reaction disc is received in a recess (3e) formed in the front side of the power piston and is retained in the recess by a cylindrical retainer (11) removably secured to the power piston. The retainer slidably receives therein the rear end of the output shaft and has stop means (11a) thereon to prevent the output shaft from accidental falling out of the power piston.

-1-

## DESCRIPTION

### "FORCE-MULTIPLYING PNEUMATIC DEVICE".

The invention relates to a force-multiplying pneumatic device, such as a booster, and more particularly to a device of the type which includes a body which is divided into front and rear chambers by a diaphragm and a power piston which is secured to the diaphragm. When a pressure difference is produced between the two chambers by operation of an input shaft, a frontward thrust is produced on the power piston and is transmitted to an output shaft through an elastic and pressure deformable reaction disc, and the reaction force from the output shaft is transmitted partially to the input shaft through the reaction disc.

The force-multiplying pneumatic device of the type described is conventionally utilised as a booster for a vehicle brake system and the pressure difference is generally produced between the atmospheric pressure and a negative pressure derived from an engine induction pipe.

In a conventional force-multiplying pneumatic device of the type described, the power piston has a recess in the front side thereof and receives the elastic reaction disc in the recess. The rear end of the output shaft is slidably received in the recess to engage with the reaction disc. A small diameter opening is formed in the power piston to communicate with the recess, and the front end of a plunger which is integral with the input shaft is slidably received in the opening, and the front surface of the plunger is adjacent to the rear surface of the reaction disc. Thus, the thrust produced on the power piston is transmitted to the output shaft through a stepped portion which is formed between the recess and the opening and through the reaction disc to the output shaft. The reaction of the output shaft is transmitted largely through the reaction disc and the stepped portion to the power piston, and is transmitted partially to the input shaft through the reaction disc which deforms elastically and protrudes into the opening to engage the front surface of the plunger.

With the above mentioned force-multiplying device, the rear end of the output shaft being directly received in the recess of the power piston, causes some problems.

As mentioned above, the reaction of the output shaft is transmitted to the power piston and to the input shaft. Thus, a force-multiplying ratio, i.e. the ratio between a force which is applied to the input shaft and the output force produced on the output shaft, is determined by the cross-sectional area of the rear end surface of the output shaft and the cross-sectional area of the opening in which the deformed reaction disc protrudes. Thus, to change the force-multiplying ratio, the area of the recess has to be changed, so that the whole power piston, the reaction disc and the output shaft have to be exchanged. Consequently, the process is time consuming and expensive. The second problem is that the output shaft will sometimes be drawn out of the power piston by vibrations or the like when the device is handled without being assembled to a vehicle.

An object of the present invention is to provide a force-multiplying pneumatic device which substantially solves the above mentioned problems.

- 3 -   0004477

According to the present invention, a force-multiplying pneumatic device, of the above-mentioned type, includes a recess formed in the front side of the power piston for receiving therein the deformable reaction disc, the front end portion of the input shaft being adjacent to the rear surface of the reaction disc, a cylindrical retainer being removably secured to the power piston and received in the recess to engage the reaction disc by an annular end thereof, a large diameter rear end portion of the output shaft being slidably inserted in the retainer, and radially inwardly projecting stop means formed on the retainer to limit frontward displacement of the large diameter rear end portion of the output shaft.

The advantages offered by the invention are mainly that the reaction disc is firmly positioned between the retainer and the bottom surface of the recess, that, to change the force-multiplying ratio, only the retainer and the rear end of the output shaft should be exchanged, and that stop means effectively prevents the output shaft from dropping off.

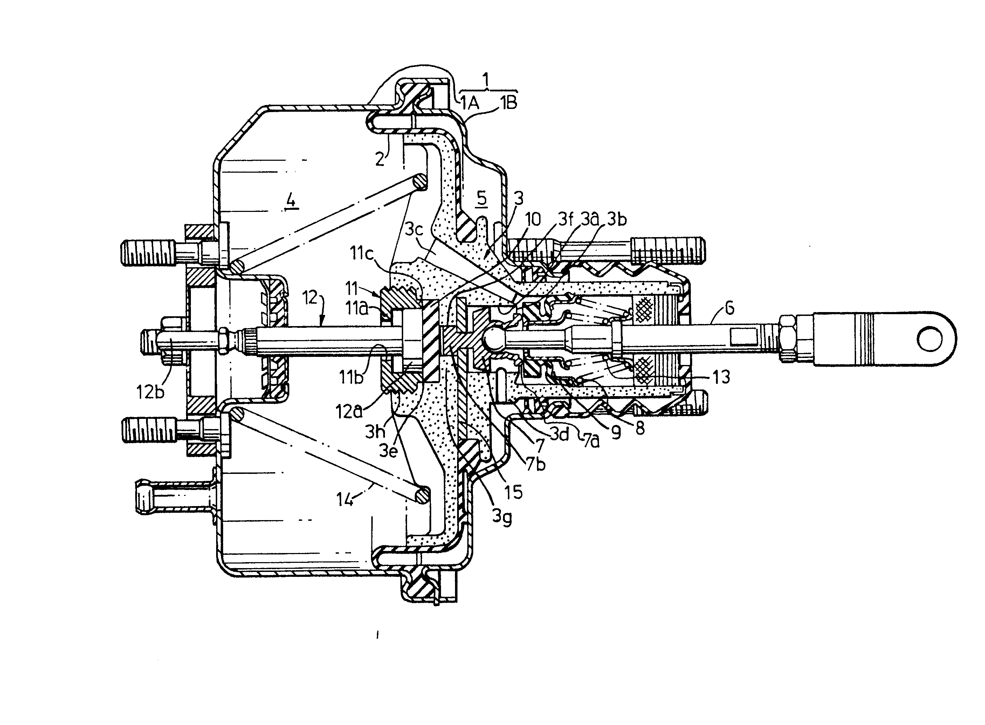

The invention is further described by way of example, with reference to the drawing which is a longitudinal sectional view of a force-multiplying pneumatic device in accordance with the invention.

The Figure shows a conventional pneumatic or vacuum booster which is shown as one example of suitable application of the present invention. The booster has a body 1 which forms an enclosed space by and which comprises a front shell 1A and a rear shell 1B. The space in the body 1 is divided by a diaphragm 2 and a power piston 3 which is attached to the diaphragm 2 into two chambers i.e. a front chamber 4 and a rear chamber 5. The power piston 3 extends hermetically through the rear shell 1B and is longitudinally slidable frontwards and rearwards relative to the rear shell 1B.

Left and right-hand sides in the drawing are called respectively "front" and "rear" sides in the following description. The front chamber 4 is communicated with a negative pressure source, e.g. a suction pipe of an engine (not shown).

A push rod 6 and a plunger 7 form an input shaft of the booster. The rear end of the rod 6 is connected to a brake pedal (not shown). A spherical front end of the rod 6 is integrally connected to the rear end of the plunger 7. The plunger 7 is slidable in a cylinder portion 3a of the power piston 3. When the brake pedal is depressed, the rod 6 and the plunger 7, are displaced frontwards.

The rear ends of a cylinder portion 3a of the power piston 3 and the plunger 7 form valve seats 3b and 7a respectively. By displacement of the plunger 7, a valve member 9, which is biased by a spring 8, engages with and disengages from the valve seats 3b and 7a. In the inoperative position, as shown in the drawing, the valve member 9 engages the valve seat 7a and is spaced from the valve seat 3b. In this position, the front and rear chambers 4 and 5 are communicated with each other through passages 3c and 3d, formed in the power piston 3. The valve seat 7a and the valve member 9 isolate the chambers 4 and 5 from atmospheric pressure which is introduced into a cylindrical rear end portion of the power piston 3.

In the front side of the power piston 3 there is formed a cylindrical recess 3e which opens to the front chamber 4 and is axially aligned with the cylinder portion 3a. The recess 3e is in communication with the cylinder portion 3a through a small diameter opening 3f. An elastic reaction disc 10, e.g. of rubber, is retained in the bottom of the recess 3e. In the opening 3f, the front end portion 7b of the plunger 7 is disposed adjacent the rear surface of the reaction disc 10. The reaction disc 10 contacts with a stepped portion 3g which is formed between a cylindrical surface of the recess 3e and the opening 3f, to determine rearward positioning of the disc 10.

The inside surface of the recess 3e of the power piston 3 has an internal screw thread 3h. A retainer 11 is screwed in the recess 3e and is thereby removably secured to the power piston 3. The retainer 11 is a generally sleeve-like member and has a radially inwardly directed flange 11a which forms a small diameter opening 11b at the front end. The rear end surface 11c of the retainer 11 engages the front surface of the reaction disc 10 to determine frontward positioning of the disc 10. Thus, the reaction disc is retained by the retainer 11 and is positioned between the stepped portion 3g of the power piston 3 and the rear surface 11c of the retainer 11.

A rear end portion 12a, i.e., a large diameter portion of an output shaft 12 is slidably engaged and guided in the retainer 11. A small diameter shaft portion of the output shaft 12 projects frontwards through the small diameter opening 11b of the retainer 11. The front end portion 12b of the output shaft 12 projects hermetically through the front shell 1A and is adapted to actuate a piston of a brake master cylinder (not shown).

The frontward displacement of the large diameter rear end portion 12a of the output shaft 12 is limited by the rear side surface of the radially inward flange 11a of the retainer 11, so that the output shaft 12 is prevented from dropping out of the recess 3a of the power piston 3. The radially inward flange 11a of the retainer 11 acts as a stop for the output shaft 12. However, such stop can be formed other than by the radially inward flange 11a. The stop may be formed by an inwardly bent projection or projections of a cylindrical retainer.

The rod 6 is urged rearwards by a spring 13. The power piston 3 is urged rearwards by a return spring 14 towards the shown inoperative position. A stop 15 acts to limit frontward and rearward displacement of the plunger 7.

In operation, when the brake pedal is depressed to urge the rod 6 frontwards, the rod 6, the plunger 7, and the valve member 9 which contacts the valve seat 7a by the spring 8 are moved integrally until the valve member 9 contacts the valve seat 3b of the power piston 3. Thus, communication between the front and rear chambers 4 and 5 is interrupted.

As the rod 6 is moved further forward, the valve seat 7a of the plunger 7 is separated from the valve member 9. Atmospheric pressure is introduced from the rear side of the valve member 9 frontwards through the clearance between the valve member 9 and the valve seat 7a and through the passage 3d into the rear chamber 5. By introduction of atmosphere into the rear chamber 5, a pressure difference is produced between the front and rear chambers 4 and 5 so that the diaphragm 2 and the power piston 3 are displaced frontwards to start a force-multiplying operation. The thrust caused by the pressure difference is transmitted through the stepped portion 3g of the power piston 3 and through the reaction disc 10 to the output shaft 12. Thus the reaction disc 10 is compressed and elastically deformed, so that a portion of the disc 10 protrudes into the opening 3f to engage the front surface of the plunger 7. Thus, reaction of the output shaft 12 is transmitted to the input shaft 6 through the plunger 7.

By the frontward displacement of the power piston 3 caused by the frontward displacement of the diaphragm 2, the valve seat 7a of the plunger 7 again contacts the valve member 9 so that an equillibrium condition is attained.    When the brake pedal is depressed further, the same process as described is repeated.

The reaction force of the output shaft 12 is transmitted through the cross-sectional area of the large diameter rear end portion 12a, i.e. the cross-sectional area of the cylindrical bore of the sleeve-like retainer 11, to the reaction disc 10.   A proportion of the reaction force is transmitted to the power piston, corresponding to the cross-sectional area of the rear end portion 12a minus the cross-sectional area of the opening 3f.    The smaller proportion of the reaction force corresponding to the cross-sectional area of the opening 3f is transmitted to the input shaft 6.    Thus, the force-multiplying ratio of the booster is determined by the cross-sectional area of the rear end portion 12a and not by the cross-sectional area of the recess 3a. To change the force-multiplying ratio, the retainer 11 is exchanged for another retainer having another inside diameter, and the output shaft 12 is exchanged for one having another rear end portion corresponding to the new retainer.    When the output shaft 12 is formed by the rear end portion 12a and another portion which are removably secured to each other, the force-multiplying ratio can be changed only by exchanging the retainer 11 and the rear end portion 12a without exchanging the whole output shaft 12.

In the embodiment shown, the front chamber 4 and the rear chamber 5 act as vacuum-to-atmospheric pressure differential space.    However, the present invention can be applied to vacuum-to-compressed air and atmosphere-to compressed air force-multiplying devices.

It will be appreciated that by adding one retainer which is removably secured to the power piston, the output shaft can be prevented from dropping accidentally out of the power piston.    Also, the power-multiplying ratio can be changed at will, by exchanging only two members, i.e. the retainer and the output shaft.

-1-

## CLAIMS

1. A force-multiplying pneumatic device including a body which is divided into front and rear chambers by a diaphragm, and a power piston which is secured to the diaphragm, whereby the application of a pressure difference between the two-chambers by operation of an input shaft, applies a frontward thrust the power piston, which thrust is transmitted to an output shaft through an elastic and pressure deformable reaction disc, the reaction force from the output shaft being transmitted partially to the input shaft through the reaction disc, characterised in that said reaction disc (10) is received in a recess (3e) formed in the front side of the power piston (3) for receiving therein the deformable reaction disc (10), the front end portion of the input shaft (6) being adjacent to the rear surface of the reaction disc (10), and in that, a cylindrical retainer (11) is removably secured to the power piston (3) and is received in the recess (3e) to engage the reaction disc (10) by an annular end (11c) thereof, a large diameter rear end portion (12a) of the output shaft (12) being slidably inserted in the retainer (11), and said retainer (11) having radially inwardly projecting stop means (11a) to limit the frontward displacement of the large diameter rear end portion (12a) of the output shaft (12).

2. A device as claimed in claim 1, characterised in that said retainer (11) guides and axially positions said output shaft (12).

3. A device as claimed in claim 1 or 2,

-2- 0004477

characterised in that said stop means are formed by a radially inward flange (11a) at the front end of said retainer (11).

1/1

European Patent Office

**EUROPEAN SEARCH REPORT**

0004477

Application number

EP 79 30 0497

| | DOCUMENTS CONSIDERED TO BE RELEVANT | | | CLASSIFICATION OF THE APPLICATION (Int. Cl.²) |
|---|---|---|---|---|
| Category | Citation of document with indication, where appropriate, of relevant passages | Relevant to claim | | B 60 T 13/24 |
| X | GB - A - 1 502 109 (THE BENDIX CORPORATION) <br><br> * Page 2, line 39 - page 4, line 24, figure 1 * <br><br> & FR - A - 2 275 668 (THE BENDIX CORPORATION) <br> & DE - A - 2 526 391 (THE BENDIX CORPORATION) <br><br> -- | 1-3 | | |
| A | GB - A - 849 395 (GENERAL MOTORS CORPORATION) <br><br> * Page 2, line 53 - page 4, line 65; figures 1-3 * <br><br> -- | 1 | | **TECHNICAL FIELDS SEARCHED (Int.Cl.²)** <br><br> B 60 T <br> F 15 B |
| A | DE - A - 2 717 550 (TOKICO LTD.) <br><br> * Page 11, paragraph 3; figure 8 * <br><br> ---- | 1 | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-06-1979 | BRAEMS |

EPO Form 1503.1 06.78